# EUROPEAN PATENT APPLICATION

(11) **EP 4 123 360 A1**
(43) Date of publication of application: **25.01.2023**
(21) Application number: 22182765.2
(22) Date of filing: 04.07.2022
(51) Int. Cl.: G02B 27/01

(54) **HEAD-MOUNTED DISPLAY APPARATUS**

(30) Priority: 22.07.2021 CN 202110828513
(71) Applicant: Coretronic Corporation, Hsin-Chu 300 (TW)
(72) Inventor: CHUANG, FU-MING, Hsin-Chu (TW); HUANG, YU-AN, Hsin-Chu (TW); CHANG, CHUAN-CHUNG, Hsin-Chu (TW)
(74) Representative: Ter Meer Steinmeister & Partner

(57) **Abstract**

An HMD apparatus includes an image source, a light guiding element, a first modulating element, and a second modulating element. The image source provides an image beam. The light guiding element is arranged on a transmission path of the image beam to transmit the image beam. The light guiding element has a first surface and a second surface opposite to each other. The image beam undergoes total internal reflection at the first surface and is emitted from the second surface. The first modulating element is arranged on one side of the first surface of the light guiding element and configured to adjust a transmittance of an ambient beam. The light guiding element is arranged between the first and second modulating elements, and the second modulating element is configured to adjust a focus position of the image beam. The HMD apparatus may improve wearing comfort and achieve good display effects.

## Description

This application claims the priority benefit of China patent application serial no. 202110828513.1, filed on July 22, 2021.

### BACKGROUND OF THE INVENTION

### Field of the Invention

The invention relates to a display apparatus; more particularly, the invention relates to a head-mounted display (HMD) apparatus.

### Description of Related Art

With the advancement of display technologies, a near eye display (NED) and a head-mounted display (HMD) have been developed and are products with great development potential. Relevant technologies that have been applied into the NED and/or HMD may be categorized into an augmented reality (AR) technology and a virtual reality (VR) technology. However, the HMD apparatus with the AR technology is not only required to have light weight but also required to allow users to achieve a visual balance when the users respond to different light intensities and brightness of displayed images in different environments and fields.

For instance, in a brighter environment (such as an outdoor environment), the brightness of the displayed image is lower than the light intensity of the real world, and thus the HMD apparatus is required to be able to modulate (reduce) the light intensity of the real world. In addition, in order to accomplish wearing comfort, the center of gravity of the HMD apparatus must be close to the center of gravity of the user's head when the user wearing the HMD apparatus. Therefore, the distance between a lens of the HMD apparatus and the eyes is adjusted to be as short as possible. At this time, if it is intended to increase the use of a pair of conventional vision correction eyeglasses, such use may be detrimental to the use of the HMD apparatus with a short distance.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

It is an object of the present invention to provide a head-mounted display (HMD) apparatus, which requires no additional eyeglasses and/or optimizes the center of gravity of a user wearing the HMD apparatus, and/or improves wearing comfort of the user.

It is a further object of the present invention to provide a head-mounted display (HMD) apparatus, whichprovides good display effects even when light intensities are changed.

Other objectives and advantages of the invention may further be learned from technical features disclosed in the invention.

The object is solved by the features of the independent claims. Preferred embodiments are given in the dependent claims.

In order to achieve one or a part or all of the foregoing objectives or other objectives, an embodiment of the invention provides an HMD apparatus which includes an image source, a light guiding element, a first modulating element, and a second modulating element. The image source provides an image beam. The light guiding element is arranged on an image beam transmission path to transmit the image beam. The light guiding element has a first surface and a second surface opposite to each other. The image beam undergoes a total internal reflection at the first surface, and the image beam is emitted from the second surface. The first modulating element is arranged on one side of the first surface of the light guiding element and is configured to adjust a transmittance of an ambient beam. The light guiding element is arranged between the first modulating element and the second modulating element, and the second modulating element is configured to adjust a focus position of the image beam.

In the following one or more optional features are given, which might be combined with the above metioned aspect alone or in combination.

In one or more embodiments, the light guiding element may be a freeform waveguide or a prism.

In one or more embodiments, the first modulating element may be arranged on the first surface of the light guiding element.

In one or more embodiments, the image beam may undergo the total internal reflection at the first surface.

In one or more embodiments, the second surface of the light guiding element may comprise a non-light-emitting region and a light-emitting region.

In one or more embodiments, the image beam may undergo the total internal reflection at the non-light-emitting region.

In one or more embodiments, the image beam may be transferred to the second modulating element through the light-emitting region.

In one or more embodiments, the first modulating element may be further configured to adjust an optical aberration of the ambient beam.

In one or more embodiments, the first modulating element and the second modulating element may be configured to change a polarizing state of the ambient beam, so as to adjust the transmittance of the ambient beam.

In one or more embodiments, a polarizing state of the image beam may be orthogonal to a polarizing state of the ambient beam.

In one or more embodiments, the first modulating element may be an electrochromic component, electrically tunable liquid crystal glass, electronic paper, or a polarizer.

In one or more embodiments, the second modulating element may be electrically tunable liquid crystal glass, an electrically tunable liquid crystal lens, or a polarizer.

In one or more embodiments, the head-mounted display apparatus may further comprise a lens module.

In one or more embodiments, the lens module may be arranged on the image beam transmission path and located between the image source and the light guiding element.

In one or more embodiments, the lens module may comprise at least one axisymmetric aspheric decentered lens.

In one or more embodiments, the head-mounted display apparatus may further comprise a light sensing element and a controller.

In one or more embodiments, the controller may be electrically connected to the light sensing element and the first modulating element.

In one or more embodiments, the light sensing element may be configured to receive an intensity of the ambient beam to provide a modulation signal.

In one or more embodiments, the controller may be configured to control the first modulating element according to the modulation signal.

In one or more embodiments, the first surface of the light guiding element may have an optical microstructure.

In view of the above, one or more embodiments of the invention have at least one of the following advantages or effects. In the HMD apparatus provided in one or more embodiments of the invention, the image source provides the image beam to the light guiding element and reflects and transmits the image beam to human eyes. Here, the light guiding element is arranged between the first modulating element and the second modulating element, the first modulating element is configured to adjust the transmittance of the ambient beam, and the second modulating element is configured to adjust the focus position of the image beam. Therefore, the first modulating element may be applied to modulate the intensity of the ambient beam transmitted to the human eyes, so as to be adapted to different condition; the second modulating element may be applied to modulate the focus position of the image beam, so as to improve the optical effects in response to different degrees of vision of the users. Thereby, the users need not wear additional eyeglasses, thereby optimizing the center of gravity of the users wearing the HMD apparatus and improving the wearing comfort, and at the same time, good display effects may be achieved even when the light intensities in the environment are different.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 schematic view of a head-mounted display (HMD) apparatus of an inventive embodiment.
FIG. 2 is a schematic view of an HMD apparatus of another embodiment of the invention.
FIG. 3 is a schematic view of an HMD apparatus of still another embodiment of the invention.
FIG. 4 is a schematic view of an HMD apparatus of still another embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms " connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

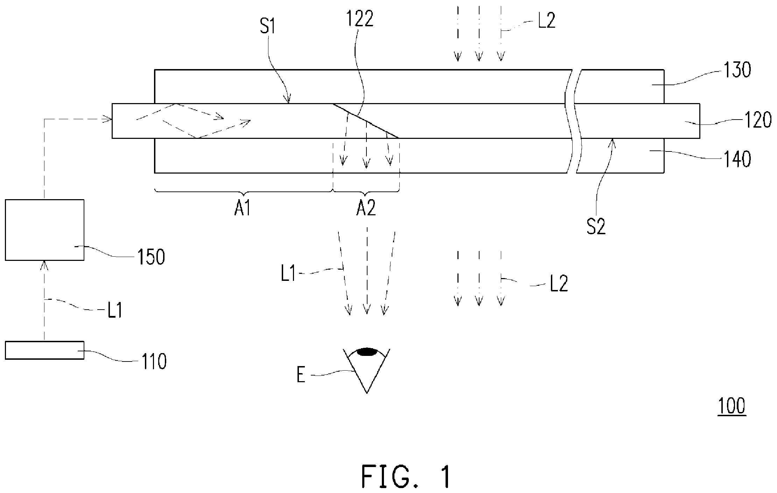

FIG. 1 is a schematic view of a head-mounted display (HMD) apparatus according to an embodiment of the invention. With reference to FIG. 1, the HMD apparatus 100 provided in this embodiment allows a user to experience augmented reality (AR) without wearing an additional pair of vision correction eyeglasses, and the configuration of the center of gravity of the HMD apparatus 100 may be optimized. The HMD apparatus 100 includes an image source 110, a light guiding element 120, a first modulating element 130, and a second modulating element 140. The image source 110 provides an image beam L1. In this embodiment, the image source 110 is, for instance, an organic light-emitting diode (OLED) display, a thin film transistor liquid crystal display (TFT-LCD), or a micro projection device, which should however not be construed as a limitation to the invention.

The light guiding element 120 is arranged on a transmission path of the image beam L1 provided by the image source 110 and configured to transmit the image beam L1 to the user's eye E. In this embodiment, the light guiding element 120 is composed of, for instance, an optical structure capable of transmitting the image beam L1, such as a freeform waveguide or a prism, which should however not be construed as a limitation to the invention. The light guiding element 120 includes at least one coupling structure 122 which is arranged corresponding to a relative position of the user's eye E (the at least one coupling structure 122 is arranged on the transmission path of the image beam L1). When the image beam L1 is transmitted to the coupling structure 122, the image beam L1 may be reflected into the user's eye E to form a virtual image. The type and the number of the coupling structure 122 may be determined according to actual requirements, which should however not be construed as a limitation to the invention. For instance, in an embodiment, the coupling structure 122 may be a reflective surface formed by combining two different components of part of the light guiding element 120 (e.g., with different refractive indices), and the reflective surface is a freeform curved surface.

The light guiding element 120 has a first surface S1 and a second surface S2 opposite to each other. For instance, the first surface S1 is located on one surface of the light guiding element 120 facing away from the user's eye E, and the second surface S2 is located on the other surface of the light guiding element 120 facing the user's eye E. The image beam L1 undergoes a total internal reflection at the first surface S1. In other words, the image beam L1 is not emitted from the first surface S1. Here, a method of producing the total reflection by the image beam L1 at the first surface S1 is performed by modulating the difference between the refractive index of the light guiding element 120 and the refractive index of an external structure (such as the first modulating element 130 described later), for instance, so as to allow the image beam L1 to undergo the total internal reflection, or by modulating an angle at which the image beam L1 enters the light guiding element 120, so as to allow the image beam L1 to undergo the total internal reflection at the first surface S1, which should however not be construed as a limitation to the invention. the invention is not limited to this.

On the other hand, the image beam L1 is emitted from the second surface S2 and transmitted to the user's eye E. For instance, the image beam L1 undergoes the total internal reflection at one portion of the second surface S2, and the image beam L1 is emitted from another portion of the second surface S2. To be specific, the second surface S2 of the light guiding element 120 includes the non-light-emitting region A1 and a light-emitting region A2. Here, the location of the light-emitting region A2 covers (related to) the location of the user's eye E (i.e., where the human eye is generally located). In particular, the second surface S2 of the light guiding element 120 may have only the light-emitting region A2 and the non-light-emitting region A1. The image beam L1 undergoes the total internal reflection in the non-light-emitting region A1 of the second surface S2, and the image beam L1 is transmitted to the outside through the light-emitting region A2 (e.g., the second modulating element 140 described later), so that the user may observe the image from the light-emitting region A2. Here, a method of producing the total reflection at the non-light-emitting region A1 of the second surface S2 by the image beam L1 is performed by modulating the difference between the refractive index of the light guiding element 120 and the refractive index of the external structure (e.g., the first modulating element 130 described later), for instance, so as to allow the image beam L1 to undergo the total internal reflection, or by modulating an angle at which the image beam L1 enters the light guiding element 120, so as to allow the image beam L1 to undergo the total internal reflection, which should however not be construed as a limitation to the invention. In an embodiment, the non-light-emitting region A1 of the first surface S1 and/or the second surface S2 of the light guiding element 120 may be designed to have an optical microstructure for enhancing the effect of the total reflection by the image beam L1, which should however not be construed as a limitation to the invention.

In this embodiment, the HMD apparatus 100 further includes a lens module 150 arranged on the transmission path of the image beam L1 and located on a transmission path between the image source 110 and the light guiding element 120. The lens module 150 is composed of at least one optical lens for transmitting the image beam L1 to the light guiding element 120. In this embodiment, the lens module 150 includes at least one axisymmetric aspheric decentered lens. Thereby, the geometric design of the coupling structure 122 in the light guiding element 120 may be further made of a non-axisymmetric freeform curved surface. As such, the overall thickness of the light guiding element 120 may be reduced, which should however not be construed as a limitation to the invention. In other embodiments, the transmission path between the image source 110 and the light guiding element 120 may further include other optical elements, such as a reflective mirror, so that the image beam L1 may be transferred to the light guiding element 120 smoothly.

Specifically, the first modulating element 130 is arranged on one side of the first surface S1 of the light guiding element 120 and is configured to adjust a transmittance of an ambient beam L2. Note that the ambient beam L2 represents the light beam transmitted from the outside to the user's eye E sequentially through the first modulating element 130, the light guiding element 120, and the second modulating element 140; namely, the scene of the outside world in front of the user. Particularly, in this embodiment, the first modulating element 130 is directly disposed on the first surface S1 of the light guiding element 120. Therefore, the image beam L1 transmitted within the light guiding element 120 may achieve the effect of the total internal reflection on the first surface S1 of the light guiding element 120 due to an incident angle and the difference between the refractive index of the light guiding element 120 and the refractive index of the first modulating element 130, which should however not be construed as a limitation to the invention. In another embodiment, an air gap may be designed between the first modulating element 130 and the light guiding element 120, so as to achieve the effect of the total internal reflection on the first surface S1 of the light guiding element 120. The first modulating element 130 is, for instance, an electrically controllable element. Therefore, the transmittance of the ambient beam L2 may be modulated according to different electrical parameters, thereby changing the intensity of the ambient beam L2 transmitted to the human eye. For instance, the HMD apparatus 100 further includes a light sensing element and a controller (not shown). The controller is electrically connected to the light sensing element and the first modulating element 130. The light sensing element is configured to receive the intensity of the ambient beam L2 to provide a modulation signal to the controller, and the controller controls the first modulating element 130 according to the modulation signal.

The second modulating element 140 is arranged on one side of the second surface S2 of the light guiding element 120 (i.e., the light guiding element 120 is located between the first modulating element 130 and the second modulating element 140), and is configured to modulate a focus position of the image beam L1 (i.e., to change the distance between the focus position and the user's eye E), so that the HMD apparatus 100 may accommodate the needs of different users. That is, the HMD apparatus 100 provided in this embodiment may perform a vision compensation function, so as to be adapted to users with different degrees of vision in no need of replacing or additionally wearing any vision compensation eyeglasses. Specifically, in this embodiment, the second modulating element 140 is directly disposed on the second surface S2 of the light guiding element 120. Therefore, the image beam L1 transmitted within the light guiding element 120 may achieve the effect of the total internal reflection on the second surface S2 of the light guiding element 120 due to the incident angle and the difference between the refractive index of the light guiding element 120 and the refractive index of the second modulating element 140, which should however not be construed as a limitation to the invention. In another embodiment, an air gap may be designed between the second modulating element 140 and the light guiding element 120, so as to achieve the effect of the total internal reflection on the second surface S2 of the light guiding element 120. The second modulating element 140 is, for instance, an electrically controllable element. Therefore, the focus position of the image beam L1 may be modulated according to different electrical parameters, so as to improve the optical effect in response to different degrees of the vision of the users. The light path transmission mode of the image beam L1 (focusing toward the user's eye E) shown in FIG. 1 is only for illustration, and The Invention is not limited to this.

Specifically, in an embodiment where both the first modulating element 130 and the second modulating element 140 are the electrically controllable elements, the first modulating element 130 and the second modulating element 140 may have an electrode structure, and the electrode structure may be made of materials with good transmittance (e.g., transparent) in the visible light band, such as a light transmitting electrode or a micro-structured electrode, which should however not be construed as a limitation to the invention.

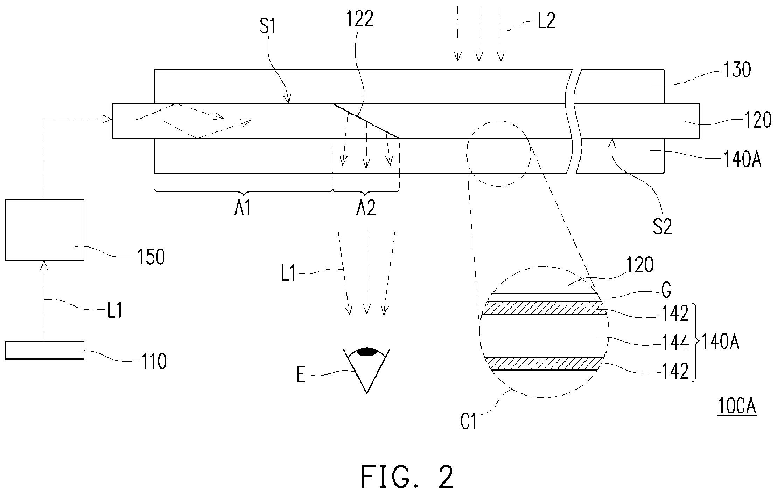

FIG. 2 is a schematic view of an HMD apparatus according to another embodiment of the invention. With reference to FIG. 2, a region C1 is a schematic enlarged view of a portion of the second modulating element 140A. For instance, in an embodiment similar to the embodiment depicted in FIG. 1, a second modulating element 140A of an HMD apparatus 100A is, for instance, an electrically controllable liquid crystal lens which includes two electrode layers 142 and a liquid crystal layer 144 sandwiched between and fixed to the two electrode layers 142. The two electrode layers 142 and the liquid crystal layer 144 constitute, for instance, a liquid crystal lens, and a focus position of the liquid crystal lens may be changed by applying different voltages to the two electrode layers 142. For instance, according to this embodiment, the HMD apparatus 100A may further include a linear polarizer (not shown) arranged between the light guiding element 120 and the second modulating element 140, so that the linear polarizer and liquid crystal molecules (not shown) distributed in the liquid crystal layer 144 may render effects similar to those rendered by the liquid crystal lens. On the other hand, the two electrode layers 142 are made of light transmitting electrode materials, e.g., indium tin oxide (ITO), and a substrate (not shown, for the two electrode lyaers 142) is made of glass or plastic. Therefore, in this embodiment, if a refractive index of the light guiding element 120 is N1, a refractive index of an air layer G is N2, a refractive index of the electrode layers 142 is N3, and a refractive index of the liquid crystal layer 144 is N4, then the image beam L1 is allowed to undergo the total internal reflection on the second surface S2 of the light guiding element 120 because N1 is greater than N2 and N3 is greater than N1. Likewise, a similar structure may also be applied to the first modulating element 130, so that the image beam L1 may undergo the total internal reflection on the first surface S1 of the light guiding element 120, which should however not be construed as a limitation to the invention. In other embodiments, the second modulating element 140A may be electrically controllable liquid crystal glass or a polarizer which respectively performs different functions and achieves different effects.

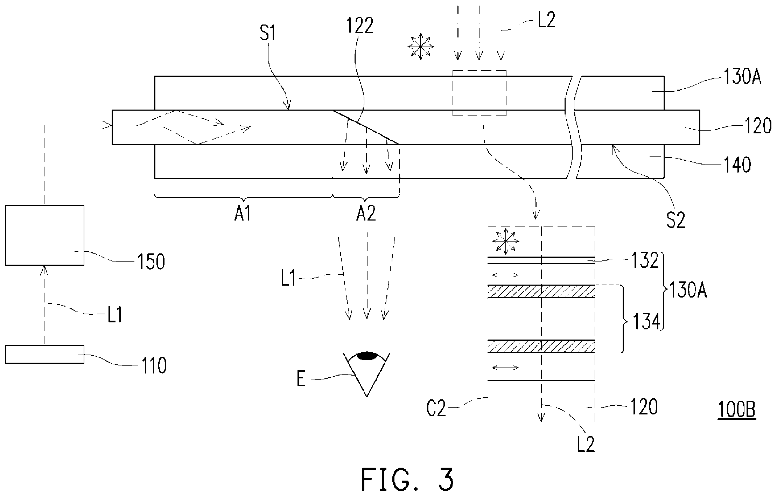

FIG. 3 is a schematic view of an HMD apparatus according to still another embodiment of the invention. With reference to FIG. 3, a region C2 is a schematic enlarged exploded view of a portion of a first modulating element 130A. It is worth mentioning that in the embodiment where both the first modulating element 130A and the second modulating element 140 apply the polarizer, the first modulating element 130A and the second modulating element 140 may be adjusted to change the polarizing state of the ambient beam L2, so as to further adjust the transmittance of the ambient beam L2. For instance, in this embodiment, the first modulating element 130A of an HMD apparatus 100B is, for instance, electrically controllable liquid crystal glass which includes a linear polarizer 132 and a liquid crystal modulating cell 134. The ambient beam L2 with a non-polarizing state is transmitted through the linear polarizer 132 and converted to a linear polarizing state, and a linear polarizing direction of the ambient beam L2 is adjusted when the ambient beam L2 passes through the liquid crystal modulating cell 134 (e.g., when the liquid crystal modulating cell 134 is activated). In this embodiment, the HMD apparatus 100B further includes a polarizer (not shown, additional polarizer) arranged between the first modulating element 130A and the second modulating element 140, e.g., between the first modulating element 130A and the light guiding element 120 (or between the light guiding element 120 and the second modulating element 140). Thereby, the transmittance of the ambient beam L2 may be adjusted (i.e., the light intensity of the ambient beam L2 may be adjusted) through the electrically adjust the linear polarizing direction of the ambient beam L2. If the second modulating element 140 includes a polarizer, note that the polarizer of the second modulating element 140 may be used directly without arranging any other polarizer (i.e., the additional polarizer), so that the integrated elements of the first modulating element 130A and the second modulating element 140 may lead to a further reduction of the thickness of the HMD apparatus 100B. In other embodiments, the first modulating element 130A may be an electrochromic component, electronic paper, or a polarizer which respectively performs different functions and achieves different effects.

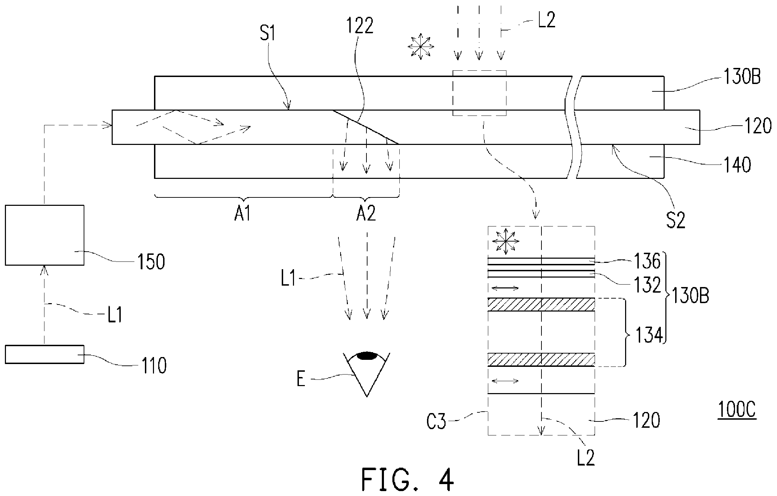

FIG. 4 is a schematic view of an HMD apparatus according to still another embodiment of the invention. With reference to FIG. 4, a region C3 is a schematic enlarged exploded view of a portion of a first modulating element 130B. In the first modulating element 130B of an HMD apparatus 100C, a dimming layer 136, such as an electrochromic component, may be arranged on the outside of the combination of the linear polarizer 132 and the liquid crystal modulating cell 134 (i.e., the linear polarizer 132 is arranged between the dimming layer 136 and the liquid crystal modulating cell 134), so as to convert the ambient beam L2 to be in the linear polarizing state. Therefore, in the above embodiments shown in FIG. 3 and FIG. 4, a liquid crystal modulating state of the first modulating element 130A and a liquid crystal modulating state of the first modulating element 130B may be further adjusted to be adapted to different situations. For instance, in an environment with sufficient outdoor light, the transmittance of the ambient beam L2 to the second modulating element 140 may be reduced by adjusting the first modulating elements 130A and 130B. By contrast, in an indoor environment, the transmittance of the ambient beam L2 to the second modulating element 140 may be increased by adjusting the first modulating elements 130A and 130B. Thereby, the HMD apparatus 100B and the HMD apparatus 100C may continuously achieve favorable display effects. In addition, the polarizing state of the ambient beam L2 passing through the first modulating elements 130A and 130B and the second modulating element 140 may be further adjusted, so that the polarizing state of the image beam L1 and the polarizing state of the ambient beam L2 transmitted to the user's eye E are orthogonal. As such, the image contrast of the display images of the real world and the HMD apparatuses 100B and 100C may be further improved.

As shown in FIG. 1, in this embodiment, note that the first modulating element 130 may further perform a function of adjusting an optical aberration of the ambient beam L2, e.g., the function of the electrically controllable liquid crystal lens (which structurally includes an element similar to the second modulating element 140A depicted in FIG. 2). In detail, when the user needs to adjust vision compensation through the second modulating element 140, and when the ambient beam L2 is transmitted through the second modulating element 140, the optical characteristics and the focus position may also be changed according to the modulation of the second modulating element 140, resulting in aberrations or image distortion. Therefore, the first modulating element 130 may further perform reverse compensation according to the modulation state of the second modulating element 140, so that the ambient beam L2 passing through the second modulating element 140 is not subject to the modulation state of the second modulating element 140, which may prevent the aberrations or image distortion. For instance, if the second modulating element 140 is configured to focus the transmitted image beam L1, the first modulating element 130 may be adjusted to diverge the ambient beam L2 passing through the first modulating element 130. In other words, the ambient beam L2 passing through the first modulating element 130 is diverged, and the ambient beam L2 passing through the second modulating element 140 is focused, so that the ambient beam L2 is restored to the optical state in the real world without distortion. As such, the display effect of the HMD apparatus 100 may be further improved.

To sum up, in the HMD apparatus provided in one or more embodiments of the Invention, the image source provides the image beam to the light guiding element, and the image beam is reflected and transmitted to the human eye. Here, the light guiding element is arranged between the first modulating element and the second modulating element, the first modulating element is configured to adjust the transmittance of the ambient beam, and the second modulating element is configured to adjust the focus position of the image beam. Therefore, the first modulating element may be configured to modulate the intensity of the ambient beam transmitted to the human eye, so as to be adapted to different scenarios and conditions, and the second modulating element may be configured to modulate the focus position of the image beam in response to different degrees of the vision of the users, so as to render favorable optical effects. As a result, the users need not wear additional eyeglasses, thereby optimizing the center of gravity of the users wearing the HMD apparatus and improving the wearing comfort, and at the same time, good display effects may be achieved even when the light intensities in the environment are different.

The foregoing description of the preferred of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present invention is intended to be dedicated to the public regardless of whether the element or component is explicitly recited in the following claims.

## Claims

1. A head-mounted display apparatus (100), comprising an image source (110), a light guiding element (120), a first modulating element (130), and a second modulating element (140), wherein:
the image source (110) provides an image beam (L1);
the light guiding element (120) is arranged on an image beam transmission path to transmit the image beam (L1), the light guiding element (120) has a first surface (S1) and a second surface (S2) opposite to each other, the image beam (L1) undergoes total internal reflection at the first surface (S1), and the image beam (L1) is emitted from the second surface (S2);
the first modulating element (130) is arranged on one side of the first surface (S1) of the light guiding element (120) and configured to adjust a transmittance of an ambient beam (L2); and
the light guiding element (120) is arranged between the first modulating element (130) and the second modulating element (140), and the second modulating element (140) is configured to adjust a focus position of the image beam (L1).

2. The head-mounted display apparatus according to claim 1, wherein the light guiding element (120) is a freeform waveguide or a prism.

3. The head-mounted display apparatus according to claim 1 or 2, wherein the first modulating element (130) is arranged on the first surface (S1) of the light guiding element (120), and the image beam (L1) undergoes the total internal reflection at the first surface (S1).

4. The head-mounted display apparatus according to any one of the preceding claims, wherein the second surface (S2) of the light guiding element (120) comprises a non-light-emitting region (A1) and a light-emitting region (A2).

5. The head-mounted display apparatus according to claim 4, the image beam (L1) undergoes the total internal reflection at the non-light-emitting region (A1), and the image beam (L1) is transferred to the second modulating element (140) through the light-emitting region A2).

6. The head-mounted display apparatus according to any one of the preceding claims, wherein the first modulating element (130) is further configured to adjust an optical aberration of the ambient beam (L2).

7. The head-mounted display apparatus according to any one of the preceding claims, wherein the first modulating element (130) and the second modulating element (140) are configured to change a polarizing state of the ambient beam (L2), so as to adjust the transmittance of the ambient beam (L2).

8. The head-mounted display apparatus according to any one of the preceding claimswherein a polarizing state of the image beam (L1) is orthogonal to a polarizing state of the ambient beam (L2).

9. The head-mounted display apparatus according to any one of the preceding claims, wherein the first modulating element (130) is an electrochromic component, electrically tunable liquid crystal glass, electronic paper, or a polarizer.

10. The head-mounted display apparatus according to any one of the preceding claims, wherein the second modulating element (140) is electrically tunable liquid crystal glass, an electrically tunable liquid crystal lens, or a polarizer.

11. The head-mounted display apparatus according to any one of the preceding claims, further comprising a lens module (150), wherein the lens module (150) is arranged on the image beam transmission path and located between the image source (110) and the light guiding element (120).

12. The head-mounted display apparatus according to claim 11, wherein the lens module (130) comprises at least one axisymmetric aspheric decentered lens.

13. The head-mounted display apparatus according to any one of the preceding claims, further comprising a light sensing element and/or a controller.

14. The head-mounted display apparatus according to claim 13, wherein the controller is electrically connected to the light sensing element and the first modulating element (130), the light sensing element is configured to receive an intensity of the ambient beam (L2) to provide a modulation signal, and the controller is configured to control the first modulating element (130) according to the modulation signal.

15. The head-mounted display apparatus according to any one of the preceding claims, wherein the first surface (S1) of the light guiding element (120) has an optical microstructure.
